# EUROPÄISCHE PATENTSCHRIFT

(11) **EP 1 665 733 B1**
(45) Veröffentlichungstag und Bekanntmachung des Hinweises auf die Patenterteilung: **05.11.2008**
(21) Anmeldenummer: 04765366.2
(22) Anmeldetag: 17.09.2004
(51) Int. Cl.: H04L 29/08

(54) **VERFAHREN ZUM AUFBAU EINER KOMMUNIKATIONSVERBINDUNG IN EINEM DIREKT KOMMUNIZIERENDEN KOMMUNIKATIONSNETZWERK**
METHOD FOR ESTABLISHING A COMMUNICATION CONNECTION IN A DIRECT COMMUNICATION NETWORK
PROCEDE D'ETABLISSEMENT D'UNE LIAISON DE COMMUNICATION DANS UN RESEAU DE COMMUNICATION DIRECTE

(30) Priorität: 26.09.2003 DE 10345072
(43) Veröffentlichungstag der Anmeldung: 07.06.2006
(60) Teilanmeldung: 07016197.1
(73) Patentinhaber: Siemens Enterprise Communications GmbH & Co. KG, 81379 München (DE)
(72) Erfinder: NEUHAUS, Ralf, 44534 Lünen (DE); UECKER, Rainer, 45470 Mülheim an der Ruhr (DE)
(74) Vertreter: Maier, Daniel Oliver
(86) Internationale Anmeldenummer: PCT/EP2004/010474
(87) Internationale Veröffentlichungsnummer: WO 2005/032102

(56) Entgegenhaltungen:
- WO-A-20/04066605
- US-A1- 2003 095 546

## Beschreibung

Die Erfindung betrifft ein Verfahren zum Aufbau einer Kommunikationsverbindung zwischen zwei Clients einer Mehrzahl Clients in einem direktkommunizierenden Kommunikationsnetzwerk gemäß des Oberbegriffs des Patentanspruchs 1.

Kommunikationsnetzwerke, deren Komponenten paketvermittelt miteinander kommunizieren, treten in verstärktem Maße an die Stelle leitungsvermittelter Kommunikationsnetzwerke. Solche Netzwerke werden häufig auch als Voice-Over-IP (VoIP)-Netzwerke bezeichnet, wenn zum Austausch der in Form von Daten vorliegenden akustischen Informationen (Sprachdaten) das Internet-Protokoll (IP-Protocol) verwendet wird. Dabei können die Netzwerke entweder ausschließlich zur Übertragung von Sprachdaten dienen, oder aber gemischt sowohl Sprachdaten als auch andere Informationen (z.B. Daten, Video) übertragen.

In den leitungsvermittelten Kommunikationsnetzwerken sind Endgeräte (z.B. Telefone, Faxgeräte) stets mit einem Kommunikationsknoten (z.B. einer Telefonanlage) verbunden. Jeglicher Informationsfluss zu und von den Endgeräten findet dabei unter Beteiligung des jeweiligen Kommunikationsknotens statt, wobei Steuerungsinformationen, beispielsweise für den Verbindungsaufbau, zwischen dem Endgerät und dem Kommunikationsknoten ausgetauscht werden, während die Nutzinformationen (das analoge Sprachsignal oder das modulierte Telefax-Signal) zwar zwischen den an der Kommunikationsverbindung beteiligten Endgeräten ausgetauscht werden, aber von zumindest einem an der Kommunikationsverbindung beteiligten Kommunikationsknoten weitergeleitet (übertragen) werden.

In den Sprachdatennetzen werden die Endgeräte häufig als "Clients" bezeichnet, weil die Endgeräte in diesen Kommunikationsnetzwerken ähnlich wie ein Computer in einem Datennetz betrieben werden und nicht nur als Telefon oder Telefaxgerät, sondern auch beispielsweise als Multimedia-PC ausgeführt sein können. Bei den letztgenannten handelt es sich um Computer, die über eine geeignete Hardware zur Informationseingabe (z.B. Mikrofon, Kamera, Tastatur, Scanner etc.) und Informationsausgabe (z.B. Bildschirm / Display, Lautsprecher, LED's etc.) verfügen. Clients können auch als Miniatur-PC (sog. PDA - Personal Digital Assistant) oder als erweitertes Mobiltelefon ("Smart-Phone") ausgestaltet sein. Die genannten Geräte sind oft mit einer schnurlosen Daten-Verbindung ausgestattet und werden dann im Falle der Mobiltelefone auch als "WLAN-Handy's" bezeichnet (WLAN = Wireless Local Area Network).

Die Clients in den Sprachdatennetzen tauschen die Nutzinformationen in der Regel direkt miteinander aus. Dazu sind nach dem Aufbau einer Kommunikationsverbindung zwei miteinander kommunizierende Clients jeweils in Kenntnis der Netzwerkadresse ihres Kommunikationspartners, und anhand dieser Netzwerkadressen tauschen sie die Datenpakete mit den Nutzinformationen miteinander aus. Zum Verbindungsaufbau hingegen werden auch in den bekannten Sprachdatennetzen zentrale Netzknoten (Kommunikationsknoten) verwendet. Solche Netzknoten sind den Sprachdatennetzen, die das H.323-Protokoll (ITU-T-H.323) verwenden, als "Gatekeeper" und in den Sprachdatennetzen, die das SIP-Protokoll (IETF-SIP; SIP = Session Initiation Protocol) verwenden, als SIP-Proxyserver bekannt.

In weit verzweigten Datennetzen, insbesondere im Internet, werden zunehmend Kommunikationsstrukturen verwendet, die als "Peer-To-Peer"-Netzwerke oder auch "End-To-End"-Netzwerke bezeichnet werden. Ein primäres Anwendungsgebiet solcher Kommunikationsstrukturen besteht im Austausch von Dateien, dem sogenannten "File sharing". Dabei fragt ein Teilnehmer (Client) einer solchen Kommunikationsstruktur eine Anzahl anderer Clients (typischerweise Computer) auf der Suche nach einer bestimmten Ressource (das kann eine Musikdatei oder ein Computerprogramm sein) ab und startet nach dem Auffinden dieser Ressource die Verwendung dieser Ressource, was zumeist mit dem Übertragen ("download") einer Datei oder mehrerer Dateien einhergeht. Dabei kann zum Auffinden entsprechender Kommunikationspartner (Clients) entweder eine Datenbank verwendet werden, oder aber die Clients können durch entsprechende Kommunikationsverfahren ohne eine zentrale Instanz aufgefunden werden.

Einige der bekannten "Peer-To-Peer"-Netzwerke werden für die Zwecke einer direkten Kommunikation verwendet. Die dabei ausgetauschten "Mediadaten", also die Nutzdaten, sind nicht auf Sprache (Sprachdaten) oder modulierte Informationen (z.B. Telefaxübermittlungen) beschränkt, sondern schließen auch Bewegtbildinformationen (Videoübertragung, Video-Konferenzen, "Multimedia-Messaging") und andere Formen der elektronischen Kommunikation mit ein. In solchen Kommunikationsnetzwerken, die man auch als "direktkommunizierende Kommunikationsnetzwerke" bezeichnet, sind also einerseits Kommunikationsverbindungen nach Art der klassischen "Telefonate" durchführbar, und andererseits sind auch erweiterte Inhalte ("Multimedia") übertragbar. Der Verzicht auf zentrale Netzknoten (Kommunikationsknoten) birgt dabei den Vorteil einer erhöhten Ausfallsicherheit, was mit dem Nachteil verbunden ist, dass die (Vermittlungs-) Funktionalität der aus der leitungsvermittelten Telephonie bekannten Netzknoten von den an der Kommunikationsverbindung beteiligten Clients selbst bereit gestellt werden muss.

Aus der Druckschrift US 2003/0095546 A1 Sakano et al. "IP Telephone terminal searching for destination with a telefone number to set up a call connection over an IP network" ist bereits ein direkt kommunizierendes Kommunikationsnetzwerk bekannt, in welchem Clients anhand von Adressen (IP-Adressen) direkt Kommunikationsverbindungen miteinander aufbauen. Dabei wird vorgeschlagen, eine Suchmeldung mit einer Rufnummer an benachbarte Clients zu versenden, wobei in den Fällen, in denen einer die Suchmeldung empfangenen Clients dieser Rufnummer zugeordnet ist, dieser Client dem ersten, suchenden Client seine IP-Adresse zur Verfügung stellt, um eine Kommunikationsverbindung auf Basis des Internet-Protokolls zu initiieren.

Bei den bekannten direktkommunizierenden Kommunikationsnetzwerken hat sich insbesondere als nachteilig herausgestellt, dass ein Client zum Aufbau einer Kommunikationsverbindung zu einem zweiten Client im Besitz der Adressinformation (z.B. die Netzwerkadresse) des zweiten Clients sein muss. Das ist ein Problem, weil in der Regel kein dem Client direkt zugeordneter Netzknoten (z.B. Kommunikations-Server) existiert, von dem eine solche Adresse abfragbar ist. Selbst wenn die Adressinformation eines gewünschten Kommunikationspartners bekannt ist, kann es in den direktkommunizierenden Kommunikationsnetzwerken vorkommen, dass dieser gewünschte Kommunikationspartner nicht erreicht werden kann (z.B. im "Besetzt"-Fall oder bei Ausfall des Clients), so dass z.B. die Verbindung zu einem alternativen Rufziel ("Ausweichziel") gewünscht wird. Da in den direktkommunizierenden Kommunikationsnetzwerken keine zentralen Netzknoten zur Speicherung einer solchen Adressinformation verwendet werden, besteht auch beim Verbindungsaufbau zu einem solchen alternativen Rufziel das Problem der Adressierung.

Aufgabe der Erfindung ist es, ein Verfahren vorzuschlagen, mit dem für Kommunikationsverbindungen in direktkommunizierenden Kommunikationsnetzwerken notwendige Adressinformationen ermittelt werden können.

Die Lösung der Aufgabe sieht ausgehend vom Oberbegriff des Patentanspruchs 1 vor, dass folgende Verfahrensschritte nacheinander durchgeführt werden: Zuerst (Schritt a) werden in einem ersten Client für den Aufbau einer paarweisen Kommunikationsverbindung zwischen den Clients erforderliche Client-Adressinformationen wenigstens eines Ziel-Clients gespeichert. Dann (Schritt b) werden von dem ersten Client die gespeicherten Client-Adressinformationen des Ziel-Clients zu einem rufenden Client übermittelt, und nachfolgend (Schritt c) verwendet der rufende Client diese Client-Adressinformationen zum Aufbau der Kommunikationsverbindung zwischen dem rufenden Client und dem Ziel-Client. Durch die Durchführung der vorgenannten Verfahrensschritte wird dem rufenden Client in dem direkt kommunizierenden Kommunikationsnetzwerk die zum Aufbau einer Kommunikationsverbindung notwendige Adresse des Ziel-Clients übermittelt, wobei der Verbindungsaufbau ohne Zugriff auf einen zentralen Kommunikationsknoten oder eine zentrale Adressen-Datenbank erfolgt. Die Ausführung einer Anrufweiterschaltung kann für den rufenden Client verborgen bleiben, wenn in Schritt a) der Ziel-Client das Anrufweiterschaltungs-Ziel für den ersten Client bildet, und in Schritt b) der erste Client bei einem eingehenden Ruf des rufenden Client Signalisierungsinformationen zur Rufsignalisierung eines weiteren Rufes zu dem Ziel-Client versendet, wobei bei der Annahme des weiteren Rufes an dem Ziel-Client von diesem eine Rufannahme-Signalisierungsnachricht zu dem ersten Client übermittelt wird, wonach von dem ersten Client die Client-Adressinformationen des Ziel-Clients zu dem rufenden Client übermittelt werden. Dabei wird die Anrufweiterschaltung nicht nur dann ausgeführt, wenn der erste Client besetzt ist, sondern auch bei einem an dem ersten Client nicht angenommenen Ruf, indem die Übermittlung der Signalisierungsinformationen zur Rufsignalisierung des weiteren Rufes zu dem Ziel-Client dann erfolgt, wenn der Ruf an dem ersten Client nicht innerhalb einer Wartezeit entgegengenommen wird. Vorteilhafterweise kann diese Wartezeit von einem Benutzer an dem ersten Client durch eine Eingabe eingestellt bzw. verändert werden. Das Leistungsmerkmal "Anrufweiterschaltung" kann dazu vorteilhaft bei einem erfolglosen Ruf zu einem freien Teilnehmer (Client) eingesetzt werden, indem in Schritt a) in den ersten Client die Angabe über eine Wartezeit eingespeichert wird, und in Schritt b) an dem ersten Client aufgrund der empfangenen Signalisierungsinformationen ein Ruf signalisiert wird und die Übermittlung der gespeicherten Client-Adressinformationen zu dem rufenden Client nur dann erfolgt, wenn der Ruf an dem ersten Client nicht innerhalb der Wartezeit entgegengenommen wird.

Das Verfahren ist durch die kennzeichnenden Merkmale der abhängigen Patentansprüche 2 bis 6 vorteilhaft ausgestaltet. Dabei können auch Merkmale der abhängigen Patentansprüche vorteilhaft miteinander kombiniert werden.

Mit dem Verfahren können in einem direkt kommunizierenden Kommunikationsnetzwerk ohne das Einbeziehen einer zentralen Vermittlungsinstanz Leistungsmerkmale realisiert werden, wobei als weiterer Vorteil durch den Wegfall eines zentralen Kommunikationsknotens bzw. eines zentralen Teilnehmerverzeichnisses eine hohe Betriebssicherheit und Verfügbarkeit in dem Kommunikationsnetzwerk erreicht wird, weil beim Ausfall einer Kommunikationskomponente (Client) nur ein verhältnismäßig geringer Teil des Kommunikationsnetzwerkes betroffen ist. Außerdem können Kommunikations-Netzwerke, die das erfindungsgemäße Verfahren verwenden, leichter erweitert werden und sind besser skalierbar.

Eine Anrufweiterschaltung kann auf einfache Weise eingerichtet und durchgeführt werden, indem zur Ausführung der Anrufweiterschaltung in Schritt a) der Ziel-Client das Anrufweiterschaltungs-Ziel für den ersten Client bildet, und zwischen den Schritten a) und b) der rufende Client zum Aufbau einer Kommunikationsverbindung Signalisierungsinformationen zur Rufsignalisierung zu dem ersten Client versendet.

Bei der Anrufweiterschaltung können von einem Benutzer an dem ersten Client verschiedene Anrufweiterschaltungs-Ziele eingegeben werden, wobei je nach Art (Dienst) des bei dem ersten Client eingehenden Rufes bzw. der mit dem Ruf beabsichtigten Kommunikationsverbindung ein geeignetes der Anrufweiterschaltungs-Ziele ausgewählt wird. Das wird erreicht, indem in Schritt a) in dem ersten Client die Client-Adressinformationen mehrerer Ziel-Clients gespeichert werden, die jeweils einem oder mehreren verschiedenen Diensten zugeordnet sind, und in Schritt b) bei einem bei dem ersten Client eingehenden Ruf in den Signalisierungsinformationen der Dienst definiert ist, der von der aufzubauenden Kommunikationsverbindung unterstützt werden soll, wobei anhand dieser Definition die Client-Adressinformationen desjenigen Ziel-Clients ausgewählt und übermittelt werden, der diesem Dienst zugeordnet ist. Dabei werden vorteilhafter Weise die Dienste aus einer Gruppe ausgewählt, die zumindest Sprachdienste, Videodienste und Datendienste umfasst.

Mit dem erfindungsgemäßen Verfahren kann ein Ruf an mehreren Clients gleichzeitig signalisiert und an einen beliebigen dieser Clients entgegengenommen werden, indem in Schritt a) der Ziel-Client als Rufzuschaltungsziel vorgesehen ist, zwischen den Schritten a) und b) der rufende Client zum Aufbau einer Kommunikationsverbindung Signalisierungsinformationen zur Rufsignalisierung zu dem ersten Client versendet, und in Schritt c) die Rufsignalisierung sowohl bei dem ersten Client als auch bei dem Ziel-Client erfolgt, indem der rufende Client weitere Signalisierungsinformationen zur Rufsignalisierung zu dem Ziel-Client versendet, wobei die Kommunikationsverbindung zwischen dem rufenden Client und dem ZielClient aufgebaut wird, wenn der Ruf an dem Ziel-Client angenommen wird.

Bei der Rufzuschaltung kann vermieden werden, dass der rufenden Client Signalisierungsinformationen zu mehreren Clients versenden soll, indem auch hier in Schritt a) der Ziel-Client als Rufzuschaltungsziel vorgesehen ist, zwischen den Schritten a) und b) der rufende Client zum Aufbau einer Kommunikationsverbindung Signalisierungsinformationen zur Rufsignalisierung zu dem ersten Client versendet, und die Rufsignalisierung sowohl bei dem ersten Client als auch bei dem Ziel-Client erfolgt, indem der erste Client weitere Signalisierungsinformationen zur Rufsignalisierung eines weiteren Rufes zu dem Ziel-Client versendet, wobei nach Annahme dieses Rufes von dem Ziel-Client zu dem ersten Client eine Rufannahme-Nachricht versendet wird, und in Schritt b) von dem ersten Client zu dem rufenden Client mit den Client-Adressinformationen des Ziel-Clients auch die Rufannahme-Nachricht übermittelt wird.

Mit dem Verfahren kann in einem direkt kommunizierenden Kommunikationsnetzwerk auf einfache Weise das Leistungsmerkmal "Rückruf" realisiert werden, indem zur Vorbereitung eines Rückrufes in Schritt a) in den Fällen, in denen ein von dem Ziel-Client bei dem ersten Client eingehender Ruf nicht angenommen wird, von dem Ziel-Client in dem ersten Client die Client-Adressinformationen zusammen mit einer Rückruf-Information gespeichert werden, und zur Durchführung des Rückrufes in Schritt b) von dem ersten Client als rufenden Client bei dem Ziel-Client die Vornahme des Rückrufes angefordert wird. Dabei kann der Rückruf bei einem besetzten Client angefordert werden, indem Schritt a) ausgeführt wird, wenn sich der erste Client im Besetzt-Zustand befindet, und die Vornahme des Rückrufes erfolgt, wenn der Besetzt-Zustand des ersten Clients nicht weiter besteht. Dem gegenüber kann ein Rückruf auch bei einem nichtbesetzten Client, an dem ein Ruf vergeblich signalisiert wurde, angefordert werden, indem Schritt a) ausgeführt wird, wenn an dem ersten Client der eingehende Ruf nicht innerhalb einer Wartezeit angenommen wird, und die Vervollständigung des Rückrufs erfolgt, wenn an den ersten Client ein eine Anwesenheit eines Benutzers wiedergebendes Ereignis erfasst wird. Vorteilhafter Weise braucht ein solches Ereignis keine explizite Reaktion eines Benutzers auf eine Rückruf-Aufforderung zu sein, wodurch der Rückruf - beispielsweise bei der Rückkehr einer Person zu ihrem Schreibtisch - mit einer möglichst geringen Zeitverzögerung initialisiert wird.

In direkt kommunizierenden Kommunikationsnetzwerken können verschiedene nicht-zentrale Nachrichtenspeicher (Sprachboxen, Videospeicher, E-Mail-System etc.) verwendet werden, indem zur Aufzeichnung und zum Abruf einer für den ersten Client bestimmten Nachricht vor Schritt a) von einem zweiten Client eine Kommunikationsverbindung zu dem Ziel-Client aufgebaut wird, wobei in dem Ziel-Client die Nachricht gespeichert wird, nach Schritt a) das Vorhandensein der gespeicherten Nachricht an dem ersten Client signalisiert wird, in Schritt b) der rufenden Client von dem ersten Client gebildet wird, und in Schritt c) mit der Kommunikationsverbindung die gespeicherte Nachricht bei dem Ziel-Client abgerufen wird. Dabei können in dem Kommunikationsnetzwerk verschiedene Dienste benutzt werden, wobei in dem Kommunikationsnetzwerk mehrere Aufzeichnungs-Clients zur Speicherung von Nachrichten verfügbar sind und vor Schritt a) von dem zweiten Client ein geeigneter der Aufzeichnungs-Clients als Ziel-Client ausgewählt wird. Dabei ist vorteilhafter Weise dem Aufzeichnungs-Client jeweils zumindest ein Typ von aufzeichenbaren Nachrichten zugeordnet, wobei in Schritt a) jeweils ein zum Typ der aufzuzeichnenden Nachricht passender Aufzeichnungs-Client ausgewählt wird.

Bei einer kurzzeitigen Unterbrechung einer bestehenden Kommunikationsverbindung, beispielsweise für Rückfragen, ist es vorteilhaft, wenn ein während der Unterbrechung wartender Teilnehmer (Client) mit Informationen (Wartemusik, Produktinformationen, etc.) versorgt wird. Das kann realisiert werden, indem in Schritt a) zwischen dem ersten Client und einem zweiten Client eine erste Kommunikationsverbindung besteht, wobei die Client-Adressinformationen des Ziel-Clients von dem zweiten Client zu dem ersten Client übertragen werden, in Schritt b) der erste Client den rufenden Client bildet, nach Schritt b) die erste Kommunikationsverbindung abgebaut wird, und nach Schritt c) die in Schritt c) aufgebaute Kommunikationsverbindung zwischen dem rufenden Client und dem Ziel-Client abgebaut und die erste Kommunikationsverbindung wieder aufgebaut wird. Dabei wird vorteilhafter Weise der Ziel-Client als Informationsquelle für Wartezeiten verwendet.

Vor der Unterbrechung der ersten Kommunikationsverbindung kann ein Benutzer des zweiten Clients entscheiden, welche Inhalte und welche Art von Medien (Sprache, Bilder, Textinformationen etc.) an den ersten Client während der Wartezeit ausgegeben werden sollen. Das wird erreicht, indem in dem Kommunikationsnetzwerk mehrere Clients als Ziel-Client verwendbar sind, wobei in Schritt a) durch den zweiten Client einer der verwendbaren Clients als Ziel-Client ausgewählt wird. Dabei kann vorteilhafter Weise der Ziel-Client als eine Instanz auf der gleichen Hardware realisiert sein, die die Basis für den ersten oder für den zweiten Client bildet.

In einem direkt kommunizierenden Kommunikationsnetzwerk können auf einfache Weise Durchsagen an Clients ausgegeben werden, wobei ohne Zutun eines Benutzers ein die Durchsage empfangender Client automatisch aktiviert werden kann, indem in Schritt c) von dem rufenden Client zu dem Ziel-Client beim Aufbau der Kommunikationsverbindung Ruf-Signalisierungsinformationen mit einem Steuerkommando übertragen werden, so dass der Ruf von dem Ziel-Client automatisch angenommen wird.

Ausführungsbeispiele des erfindungsgemäßen Verfahrens sind nachfolgend anhand der Zeichnungen erläutert.

Dabei zeigen:
- Figur 1a, 1b: den Austausch von Signalisierungsinformationen zwischen Clients eines direkt kommunizierenden Kommunikationsnetzwerkes zum Zwecke einer An- rufweiterschaltung im Frei-Fall,
- Figur 1c, 1d: den Austausch von Signalisierungsinformationen für eine Anrufweiterschaltung im Besetzt-Fall,
- Figur 2a: eine Anordnung von Clients in einem direkt kom- munizierenden Kommunikationsnetzwerk zur Reali- sierung einer Rufzuschaltung in einer ersten Variante,
- Figur 2b: den Austausch von Signalisierungsinformationen für die Realisierung einer Rufzuschaltung in einer zweiten Variante,
- Figur 3a: die Einleitung eines Rückrufes für einen be- setzten Client,
- Figur 3b: den Austausch von Signalisierungsinformationen zur Einleitung und zur Ausführung eines Rückru- fes bei einem besetzten Client,
- Figur 3c: die Signalisierung eines Rufes bei einem freien (nicht-besetzten) Client,
- Figur 3d: die Signalisierungsinformationen bei der Ein- leitung und bei der Ausführung eines Rückrufes bei einem freien Client,
- Figur 4a: das Speichern einer Nachricht für einen Client und die Signalisierung einer gespeicherten Nachricht bei diesem Client,
- Figur 4b: den Abruf der gespeicherten Nachricht durch den benachrichtigten Client, und
- Figur 5: die Versorgung eines Clients mit Warteinforma- tionen während einer gehaltenen Kommunikations- verbindung.

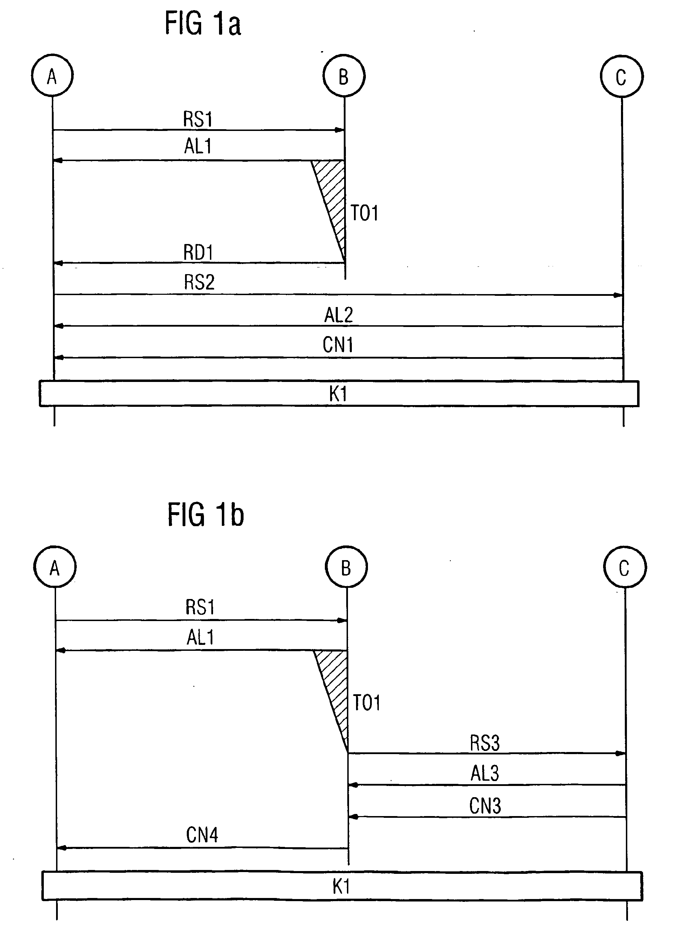

Die Figur 1a zeigt in schematischer Darstellung Clients A, B, C, die in einem (nicht dargestellten) direkt kommunizierenden Kommunikationsnetzwerk angeordnet sind. Die Clients A, B, C in diesem und in den folgenden Ausführungsbeispielen sind als Multimedia-PCs ausgeführt, die in einem paketvermittelten Kommunikationsnetzwerk (IP-Netz; IP = Internet Protocol) Kommunikationsverbindungen miteinander aufbauen, indem sie Signalisierungsinformationen (Steuermeldungen) miteinander austauschen. Diese Steuermeldungen sind in den Figuren als Pfeile dargestellt, wobei die Pfeilrichtung jeweils die Richtung des Informationsflusses der jeweiligen Steuermeldung bezeichnet. Dabei kann zum Austausch einer Steuermeldung ein mehrfacher Datenaustausch zwischen den die Steuermeldung austauschenden Clients stattfinden, beispielsweise um in sog. "Handshake-Verfahren" den Empfang einer Steuermeldung zu quittieren. Bei den in den Figuren schematisch dargestellten Kommunikationsverbindungen zwischen den Clients handelt es sich um jeweils eine logische Beziehung zwischen zwei Clients, wobei anhand von zuvor ausgetauschten Client-Adressinformationen Datenpakete mit Nutzinformationen zwischen den Clients übermittelt werden. Bei den Nutzinformationen kann es sich wahlweise um Sprachinformationen (Sprachdaten) oder andere Inhalte (z.B. Videoinformationen, Textinformationen) handeln, wobei auch Mischformen der verschiedenen Typen von Informationen (man sagt dazu auch "Dienste") möglich sind.

Die aus der Figur 1a und aus den folgenden Figuren bekannten Clients, Steuermeldungen und Kommunikationsverbindungen werden mit den gleichen Bezugszeichen auch in anderen Figuren wiederholt verwendet. In diesen Fällen handelt es sich dann um im wesentlichen funktionsgleiche Clients, Steuermeldungen und Kommunikationsverbindungen, die dann in der Figurenbeschreibung der weiteren Figuren nicht wiederholt beschrieben werden.

Anstelle der in den Figuren verwendeten Multimedia-PCs als Clients können auch beliebige andere zur Kommunikation vorgesehene Komponenten eingesetzt werden, beispielsweise Telephonie-Endgeräte (IP-Telefone, VoIP-Telefone; VoIP = Voice-over-Internet-Protocol), Telefaxgeräte etc.. Wesentlich für die hier gezeigten Clients ist, dass sie zum Betrieb in direkt kommunizierenden Kommunikationsnetzwerken ausgelegt sind, d. h. dass ihre Funktion und das Zusammenwirken mit anderen Clients und Einrichtungen der Kommunikationsnetzwerke ohne die Verwendung einer zentralen Instanz, beispielsweise eines Kommunikationsknotens oder eines zentralen Servers, gegeben ist. Dieses Prinzip gilt auch dann, wenn die Funktionalität eines Clients zur Ausführung einer bestimmten Aufgabe nicht ausreichend ist und daher sich dieser Client eines Stellvertreters ("Proxy") zur Ausübung der fehlenden Funktionalität bedient.

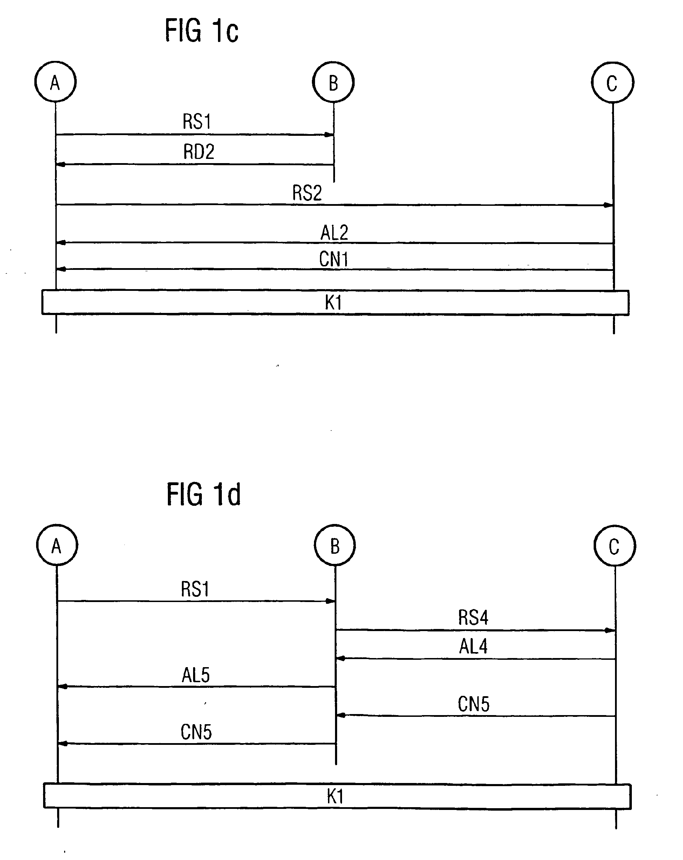

Im Folgenden wird anhand der Figuren 1a, 1b, 1c und 1d die Realisierung des Leistungsmerkmals "Anrufweiterschaltung" mit Hilfe des erfindungsgemäßen Verfahrens gezeigt, wobei die Figuren 1a und 1b die Anrufweiterschaltung bei einem Ruf auf einen freien Teilnehmer zeigen, und die Figuren 1c und 1d die Anrufweiterschaltung bei einem Ruf auf einen besetzten Teilnehmer zeigen.

In der Figur 1a hat ein Benutzer des Clients B als erstem Client mit einer Eingabe festgelegt, dass alle Rufe, die sein Endgerät (Client B) erreichen, nach einer Wartezeit TO1 (TO = Time Out) von 20 Sekunden zu Client C als Zielclient weitergeleitet werden sollen, falls der Ruf innerhalb dieser Wartezeit TO1 nicht an Client B angenommen wird. Von Client A als rufendem Client aus soll nun eine Kommunikationsverbindung zu Client B aufgebaut werden. Dazu versendet Client A eine Ruf-Signalisierungsnachricht RS1 zu Client B, wodurch an Client B eine Rufsignalisierung (Client B "klingelt") ausgelöst wird. Gleichzeitig versendet Client B zur Bestätigung eine Bestätigungsnachricht AL1 ("Alerting") zu Client A. Der Ruf wird an Client B nicht angenommen, so dass die Wartezeit TO1 abläuft.

Nun versendet Client B zu Client A eine Anruf-Umleitungsnachricht RD1 (RD = Redirect), die Client A anweist, den an Client B signalisierten Ruf nunmehr an Client C als Zielclient zu signalisieren. Die Anruf-Umleitungsnachricht RD1 umfasst dabei die Client-Adressinformationen des Clients C, die von dem Benutzer bei seiner Bestimmung von Client C als Anruf-Weiterschaltungsziel eingegeben wurde. Nun wird die Signalisierung des Rufes an Client B eingestellt, und Client A versendet als rufender Client zu Client C weitere Ruf-Signalisierungsinformationen RS2, nach deren Empfang Client C beginnt, den Ruf zu signalisieren, und woraufhin Client C zur Bestätigung eine Quittierungsnachricht AL2 ("Alerting") zu Client A versendet. Nach Annahme des Rufes an Client C versendet Client C zu Client A eine Rufannahme-Signalisierungsnachricht CN1 ("Connect"), wonach die Kommunikationsverbindung K1 (Nutzdatenverbindung) zwischen Client A und Client C etabliert wird.

In der Figur 1b wird als weiteres Beispiel einer Anruf-Weiterschaltung im Frei-Fall wiederum in Client B als erstem Client durch einen Benutzer die Wartezeit TO1 und die Client-Adressinformationen des Clients C als Anruf-Weiterschaltungsziel (Zielclient) für nichtangenommene Rufe an Client B definiert. Auch in diesem Fall findet ein Ruf von Client A zu Client B mit Hilfe der Ruf-Signalisierungsnachricht RS1 statt, wobei auch dieser Ruf mit der Quittierungsnachricht AL1 bestätigt wird, und wobei auch in diesem Fall die Wartezeit TO1 abläuft, ohne dass der Ruf an Client B angenommen wurde. Im Unterschied zu dem anhand der Figur 1a geschilderten Verfahren stellt nun Client B die Signalisierung des Rufes ein und versendet nun zu Client C eine weitere Ruf-Signalisierungsnachricht RS3, die neben dem Befehl, einen Ruf an Client C zu signalisieren, auch die Zusatzinformation umfasst, dass dieser Ruf ein weiterschalteter Ruf des Clients A ist. An Client C wird nun der Ruf signalisiert und eine Quittierungsnachricht AL3 an Client B verschickt. Nach Annahme des Rufes an Client C versendet Client C eine Ruf-Annahmenachricht CN3 zu Client B, wonach Client B eine weitere Ruf-Annahmenachricht CN4 zu Client A als rufendem Client verschickt, die die Information umfasst, dass der anhand der Ruf-Signalisierungsnachricht RS1 signalisierte Ruf zu Client C weitergeschaltet und dort angenommen wurde. In dieser Ruf-Annahmenachricht CN4 sind auch die Client-Adressinformationen des Zielclients Client C enthalten, so dass nun die Kommunikationsverbindung K1 zwischen Client A und Client C aufgebaut wird.

Die Figur 1c zeigt die Anruf-Weiterschaltung im Besetzt-Fall in einer ersten Variante. An Client B als erstem Client wird durch einen Benutzer Client C als Zielclient für eine Anruf-Weiterschaltung im Besetzt-Fall definiert. Dabei werden auch die Client-Adressinformationen des Zielclients Client C in Client B gespeichert. Nun versendet Client A Ruf-Signalisierungsnachrichten RS1 zu Client B, der jedoch durch eine weitere, hier nicht dargestellte Kommunikationsverbindung bereits belegt (besetzt) ist. Anhand der eingespeicherten Informationen versendet nun Client B eine Anruf-Umleitungsnachricht RD2 zur Anruf-Weiterschaltung zu Client A, welche die Bezeichnung und die Client-Adressinformationen vom Client C als Zielclient umfassen und weiterhin die Information darüber umfasst, dass Client B sich im Besetzt-Zustand befindet und daher dieser Ruf zu Client C weitergeschaltet werden soll. Nur versendet Client A als rufender Client weitere Ruf-Signalisierungsinformationen RS2 zu Client C, wonach der Ruf an Client C signalisiert und die Quittierungsnachricht AL2 zu Client A versendet wird. Nach Annahme des Rufes an Client C versendet Client C eine Ruf-Annahmenachricht CN1 zu Client A, nach deren Empfang die Kommunikationsverbindung K1 zwischen Client A und Client C aufgebaut wird.

Auch in der Figur 1d sind die zwischen den Clients A, B, C ausgetauschten Signalisierungsnachrichten zur Realisierung einer Anruf-Weiterschaltung im Besetzt-Fall dargestellt. Auch bei dieser Variante werden in Client B als erstem Client der Name und die Client-Adressinformationen des Clients C als Zielclient der Anruf-Weiterschaltung im Besetzt-Fall gespeichert. Nun versendet Client A wiederum zu Client B Ruf-Signalisierungsnachrichten RS1, wobei auch in diesem Fall Client B besetzt ist und den Ruf selbst nicht signalisiert. Client B versendet nun weitere Ruf-Signalisierungsnachrichten RS4 zu Client C, wobei aus dieser Ruf-Signalisierungsnachricht hervorgeht, dass es sich bei dem Ruf um ein von Client A ausgehenden Ruf handelt. Dabei werden auch die mit der Ruf-Signalisierungsnachricht RS1 zu Client B übertragenen Client-Adressinformationen des Clients A an Client C weitergereicht. Der Ruf wird nun an Client C signalisiert, wobei diese Tatsache durch die Quittierungsnachricht AL4 von Client C an Client B gemeldet wird. Nach Empfang der Quittierungsnachricht AL4 versendet Client B zu Client A eine Quittierungsnachricht AL5, aus der hervorgeht, dass der durch die Ruf-Signalisierungsnachricht RS1 ausgelöste Ruf zu Client C weitergeschaltet wurde und an Client C nun signalisiert wird. Nach Annahme des Rufes an Client C versendet Client C eine Ruf-Annahmenachricht CN5 an Client B, wonach Client B zu Client A die Ruf-Annahmenachricht CN6 versendet, aus der hervorgeht, dass der Ruf an Client C angenommen wurde. Die Ruf-Annahmenachrichten CN5 und CN6 umfassen jeweils auch die Client-Adressinformationen des Clients C. In Client A liegt nun die Information vor, dass der Ruf an Client C angenommen wurde, und gleichzeitig liegen auch in Client A (als rufender Client) die Client-Adressinformationen des Clients C vor. Auf der anderen Seite liegen auch in Client C die Client-Adressinformationen des Clients A vor, so dass als Nutzdatenverbindung die Kommunikationsverbindung K1 direkt zwischen den Clients A und C aufgebaut werden kann.

In den anhand der Figuren 1a, 1b, 1c und 1d beschriebenen Ausführungsbeispielen können in Client B als erstem Client jeweils auch mehrere Anruf-Weiterschaltungsziele gespeichert werden. Dabei kann jedem dieser Anruf-Weiterschaltungs-ziele ein Dienst zugeordnet werden. Damit kann beispielsweise Client C als Anruf-Weiterschaltungsziel für Sprach-Kommunikationsverbindungen verwendet werden, während ein (hier nicht dargestellter) Client D als Rufziel für Faxnachrichten dient. Das setzt voraus, dass die Ruf-Signalisierungsnachricht RS1 jeweils auch Angaben über den Dienst umfasst, der durch die beabsichtigte Kommunikationsverbindung K1 genutzt werden soll. Dann wird in Client B einer derjenigen Clients als Zielclient ausgewählt, der für den Dienst der Kommunikationsverbindung K1 geeignet ist.

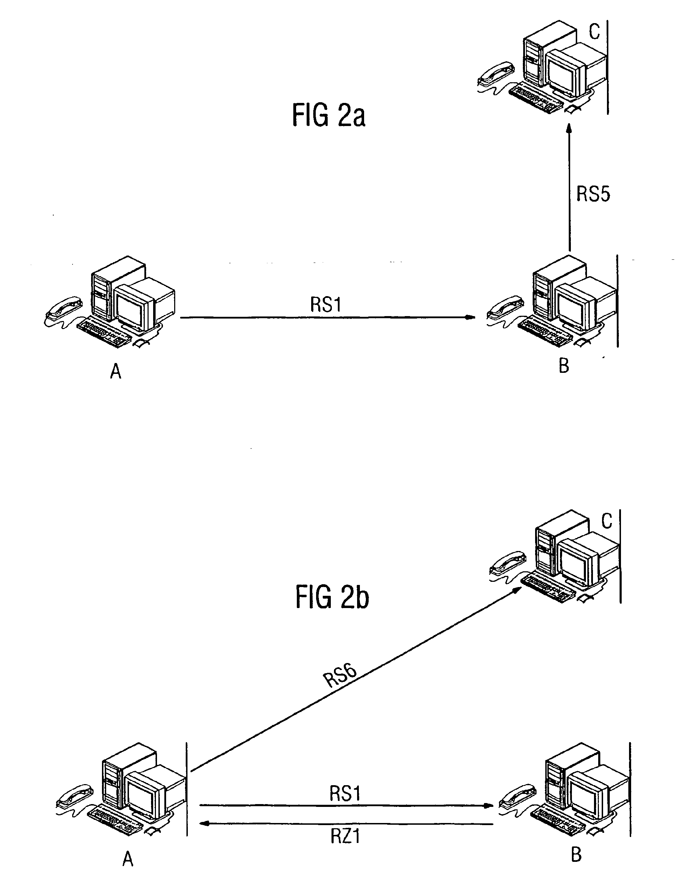

Anhand der Figuren 2a und 2b wird im Folgenden die Realisierung des Leistungsmerkmals "Rufzuschaltung" in einem direkt kommunizierenden Kommunikationsnetzwerk erläutert. Bei der Rufzuschaltung wird ein Ruf nicht nur an einem gerufenen Endgerät (Client) signalisiert, sondern zur gleichen Zeit auch an zumindest einem weiteren Client. Dabei kann der Ruf an jedem der diesen Ruf signalisierenden Clients entgegengenommen werden.

In den Figuren 2a und 2b sind die aus den Figuren 1a bis 1d bereits bekannten Clients A, B, C gezeigt. In einer ersten Variante der Ausführung einer Rufzuschaltung, die anhand der Figur 2a erläutert wird, wird durch einen Benutzer in den Client B als erstem Client die Bezeichnung und die Client-Adressinformationen des Clients C als Zielclient für die Rufzuschaltung gespeichert. Zum Aufbau einer Kommunikationsverbindung versendet Client A Ruf-Signalisierungsnachrichten RS1 zum Client B. Client B beginnt mit der Signalisierung des Rufes ("Client B klingelt") und versendet weiterhin weitere Ruf-Signalisierungsnachrichten RS5 zu Client C als Zielclient, wobei in der Ruf-Signalisierungsnachricht RS5 genau wie in der Ruf-Signalisierungsnachricht RS1 der rufende Client A mit seinen Client-Adressinformationen angegeben ist. Aufgrund der empfangenen Ruf-Rufsignalisierungsnachricht RS5 wird der Ruf des Clients A nun auch an Client C signalisiert, wobei bei der Annahme des Rufes an Client C eine Ruf-Annahmenachricht, die die Client-Adressinformationen des Clients C umfasst, von Client C zu Client B versendet und von Client B zu Client A weitergeleitet wird. Nach Empfang dieser Ruf-Annahmenachricht durch Client A wird die Kommunikationsverbindung zwischen Client A als rufendem Client und Client C aufgebaut.

Alternativ kann nach Annahme des Rufes an Client C die Ruf-Annahmenachricht auch direkt von Client C zu Client A übermittelt werden.

Wenn der gleichzeitig an Client B und Client C signalisierte Ruf an Client B anstelle des Clients C angenommen wird, versendet Client B eine Rufsignalisierungs-Stornierungsnachricht an Client C, nach deren Empfang an Client D die Rufsignalisierung an Client C eingestellt wird, und weiterhin versendet Client B zu Client A eine Rufannahme-Signalisierungsnachricht, die die Client-Adressinformationen des Clients C umfasst und nach deren Empfang durch Client A eine Kommunikationsverbindung zwischen Client A und Client B aufgebaut wird.

In der Figur 2b ist eine zweite Variante für die Realisierung des Leistungsmerkmales "Rufzuschaltung" gezeigt. Auch in diesem Beispiel ist der Client A der rufende Client, der Client B der erste Client und der Client C der Zielclient. Ebenso ist in Client B die Information darüber abgelegt, dass der Client C jeden Ruf, der an. Client B signalisiert wird, ebenfalls signalisieren soll. Dazu sind in Client B auch die Client-Adressinformationen des Clients C gespeichert. Zum Aufbau einer Kommunikationsverbindung versendet Client A zu Client B die Ruf-Signalisierungsnachricht RS1. Der Ruf wird an Client B signalisiert, und gleichzeitig versendet Client B eine Rufzuschaltungs-Signalisierungsnachricht RZ1 zurück zu Client A. Aus dieser Rufzuschaltungs-Signalisierungsnachricht RZ1 geht hervor, dass der von Client A bei Client B signalisierte Ruf auch an Client C mit dessen zugeordneter Client-Adresse signalisiert werden soll.

Nach Empfang dieser Rufzuschaltungs-Signalisierungsnachricht RZ1 versendet der Client A eine weiter Ruf-Signalisierungsnachricht zu Client C, wobei in dieser Ruf-Signalisierungsnachricht die Information enthalten ist, dass es sich bei diesem Ruf um einen von Client B zugeschalteten Ruf handelt. Nach Empfang der Ruf-Signalisierungsnachricht RS6 wird der Ruf auch an Client C signalisiert. Die Signalisierung des Rufes wird sowohl von Client B als auch von Client C jeweils mit einer (hier nicht dargestellten) Quittierungsnachricht bei Client A bestätigt. Wird der Ruf nun an Client C angenommen, versendet Client C zu Client A eine Rufannahme-Nachricht, nach deren Empfang Client A zu Client B eine Steuerungsnachricht zur Beendigung des durch die Ruf-Signalisierungsnachricht RS1 initiierten Rufes versendet, und wodurch weiterhin die Kommunikationsverbindung zwischen Client A und Client C aufgebaut wird.

Alternativ kann der gleichzeitig an Client B und Client C signalisierte Ruf an Client B entgegengenommen werden, wodurch dann durch Client B eine Rufannahme-Nachricht zu Client A versendet wird. In diesem Fall versendet Client A eine Steuerungsnachricht zu Beendigung des durch die Ruf-Signalisierungsnachricht (Stornierungs-Nachricht) RS6 initiierten Rufes zu Client C, und weiterhin wird die Kommunikationsverbindung zwischen Client A und Client B aufgebaut.

Bei den anhand der Figuren 2a und 2b geschilderten Verfahren zur Rufzuschaltung können in dem ersten Client B auch jeweils mehrere Rufschaltungs-Ziele definiert sein. Dabei kann ein Ruf wahlweise auch bei mehr als zwei Endgeräten (Clients) signalisiert werden; alternativ oder zusätzlich können diesen Rufzuschaltungs-Zielen auch verschiedene Dienste zugeordnet sein, wobei in Abhängigkeit des Dienstes, der durch die Ruf-Signalisierungsnachricht RS1 jeweils angefordert wird, durch Client B ein entsprechender oder mehrere entsprechende Zielclients ausgewählt werden können. Weiterhin kann in Client B auch der "Absender" der Ruf-Signalisierungsnachricht RS1 ausgewertet werden, so dass nur die Rufe ausgewählter rufender Clients bei weiteren Clients signalisiert werden.

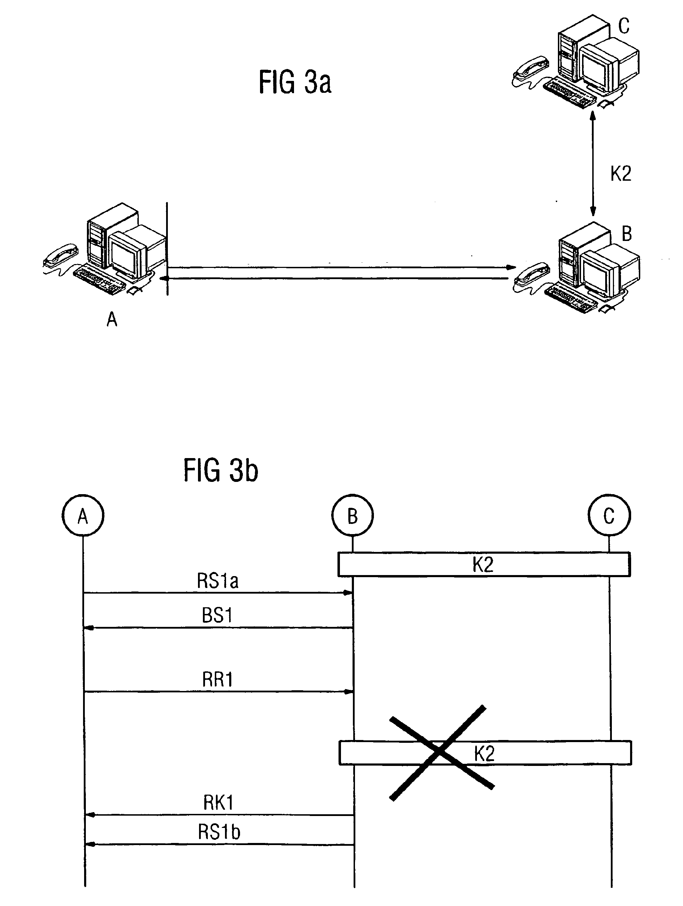

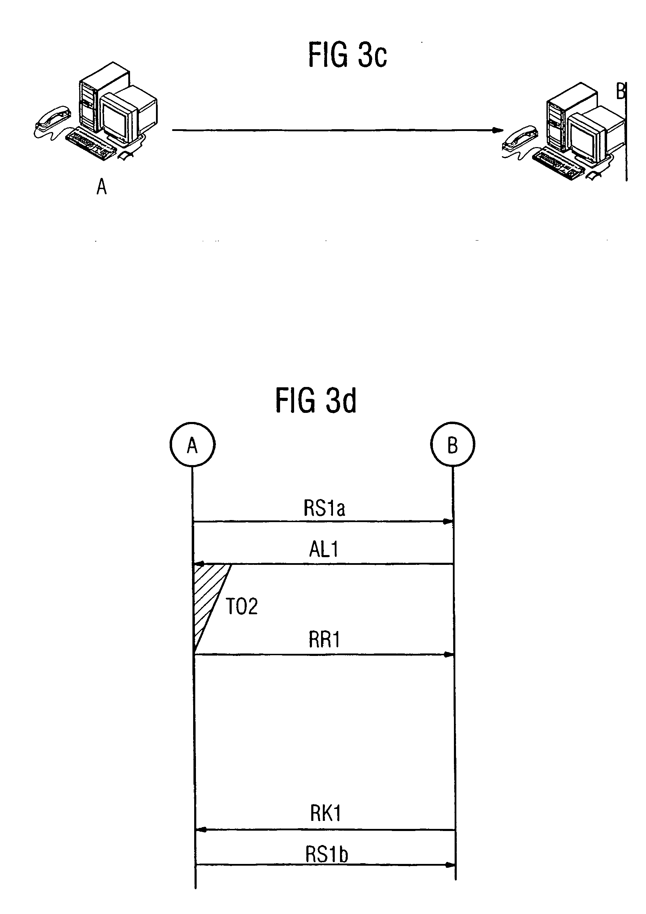

Im Folgenden wird anhand der Figuren 3a, 3b, 3c und 3d die Realisierung des Leistungsmerkmals "Rückruf" in einem direkt kommunizierenden Kommunikationsnetzwerk gezeigt. Dabei betreffen die Figuren 3a und 3b den Rückruf eines besetzten Teilnehmers, und die Figuren 3c und 3d den Rückruf eines freien Teilnehmers, der einen Ruf innerhalb einer vorher eingestellten maximalen Wartezeit nicht angenommen hat.

In der Figur 3a ist zur Erläuterung des Verfahrens "Rückruf bei Besetzt" der Client A als Zielclient und der Client B als erster Client und gleichzeitig als rufender Client dargestellt. Der Client B ist dabei mit dem Client C in einer Kommunikationsverbindung K2 verbunden, so dass der Client B besetzt ist.

Im Folgenden wird anhand der Figur 3b die Vorbereitung und die Durchführung eines Rückrufes zwischen Client A und Client B aus der Figur 3a beschrieben. Der Client A versendet zum Aufbau einer Kommunikationsverbindung eine Ruf-Signalisierungsnachricht RS1a zu dem Client B. Da der Client B aufgrund der Kommunikationsverbindung K2 mit dem Client C besetzt ist, beantwortet der Client B die Ruf-Signalisierungsnachricht RS1a indem er eine Besetzt-Nachricht BS1 zum Client A versendet. An dem Client A wird nun angezeigt, dass der gewünschte (gerufene) Client B besetzt ist. Der Benutzer des Clients A gibt nun einen Befehl an seinem Endgerät ein, mit dem der Rückruf initialisiert werden soll. In Folge dieses Befehls versendet der Client A zu Client B eine Rückruf-Aufforderungsnachricht RR1, die den Namen und die Client-Adressinformation des Clients A umfassen. Der Client B quittiert zum Client A hin den Empfang der Rückruf-Aufforderungsnachricht RR1 mit einer (hier nicht dargestellten) Quittierungsnachricht.

Nach dem Ende der Kommunikationsverbindung K2 versendet der Client B zu Client A eine Rückruf-Komplettierungsnachricht RK1, wodurch dem Client A mitgeteilt wird, dass der mit der Rückruf-Anforderungsnachricht RR1 vorbereitete Rückruf erfolgen kann. Zum Versenden der Rückruf-Komplettierungsnachricht RR1 werden dabei die Client-Adressinformationen des Clients A verwendet, die mit der Rückruf-Anforderungsnachricht RR1 zum Client B übertragen und dort gespeichert wurden. Nach Empfang der Rückruf-Komplettierungsnachricht RK1 versendet Client A zu Client B eine neue Ruf-Signalisierungsnachricht RS1b, wodurch an dem - nunmehr nicht mehr besetzten - Client B der Ruf des Clients A signalisiert wird. Nach Annahme des Rufes an Client B (dieser Schritt ist in der Figur 3b nicht mehr dargestellt) versendet Client B zum Client A eine Rufannahme-nachricht, wodurch die Kommunikationsverbindung zwischen Client A und Client B aufgebaut wird.

In den Figuren 3c und 3d ist der Rückruf auf einen freien Teilnehmer dargestellt, wobei in der Figur 3c die Anordnung aus Client A als Zielclient und Client B als erstem Client und gleichzeitig als rufendem Client dargestellt ist. In der Figur 3d ist der Austausch der diesbezüglichen Signalisierungsnachrichten zwischen Client A und Client B schematisch dargestellt.

Aus der Figur 3d wird deutlich, dass Client A zu Client B zum Aufbau einer Kommunikationsverbindung eine erste Ruf-Signalisierungsnachricht RS1a versendet. Aufgrund dieser Ruf-Signalisierungsnachricht RS1a wird der Ruf an Client B signalisiert, und als Quittierungsnachricht wird vom Client B zu Client A eine Ruf-Bestätigungsnachricht AL1 ("Alerting") versendet. In dem Client A ist eine Maximalzeit TO2 (hier: 20 Sekunden) eingespeichert, die die maximale Zeitdauer einer Rufsignalisierung eines von Client A ausgehenden Rufes definiert. Nachdem innerhalb dieser Maximalzeit TO2 der Ruf von Client B nicht angenommen wird, versendet Client A zu Client B die Rückruf-Anforderungsnachricht RR1, die neben der Aufforderung zum Rückruf auch die Client-Adressinformationen des Clients A umfasst. Diese Rückruf-Aufforderung wird in Client B zusammen mit den empfangenen Client-Adressinformationen des Clients A gespeichert.

Die Durchführung des Rückrufes von Client B zu Client A macht selbstverständlich erst dann Sinn, wenn an Client B ein Benutzer anwesend ist, für den die Kommunikationsverbindung bestimmt sein könnte. Daher wartet das Endgerät, welches den Client B bildet, auf ein entsprechendes Ereignis, welches die Anwesenheit einer natürlichen Person wiedergeben könnte. Dies ist in diesem Fall der Druck einer beliebigen Taste an der Benutzeroberfläche des Clients B. Selbstverständlich kommt dafür auch jedes andere Ereignis in Frage, welches durch eine mit dem Client B verbundene technische Einrichtung erfasst werden kann. Nach Eintritt dieses Ereignisses wird eine Rückruf-Komplettierungsnachricht RK1 vom Client B zu Client A versendet, in deren Folge von Client A zu Client B eine neue Ruf-Signalisierungsnachricht RS1b versendet wird. Nach Empfang der Ruf-Signalisierungsnachricht RS1b wird der Ruf an Client B signalisiert, wobei nach der Annahme des Rufes eine entsprechende (hier nicht weiter dargestellte) Ruf-Annahmenachricht von Client B zu Client A versendet wird, und in der weiteren Folge die Kommunikationsverbindung zwischen Client A und Client B etabliert wird. Dabei ist anzumerken, dass die Rufsignalisierung und damit der Aufbau des Rufes sowohl bei der ersten Ruf-Signalisierungsnachricht RS1a als auch bei der weiteren Ruf-Signalisierungsnachricht RS1b von Client A ausgeht, so dass bei der Erhebung von Gebühren, bei der in der Regel immer der ursprünglich rufende Client belastet werden soll, auch bei Durchführung des Rückrufes Client A belastet wird.

Bei den vorgenannten Ausführungsbeispielen kann es vorteilhaft sein, wenn ein Ruf an einen Client nicht explizit durch einen Benutzer angenommen werden muss. Dazu wird mit den Ruf-Signalisierungsnachrichten zu einem gerufenen Client ein "Durchsage"-Befehl übermittelt, durch den eine Rufsignalisierung unterbleibt und der gerufene Client direkt entweder in einen "Wiedergabe"-Modus (empfangen/wiedergeben) oder in einen vollständig aktiven Modus ("Direktansprechen"-Modus: senden und empfangen) geschaltet wird. Mit Hilfe des "Durchsage"-Befehls kann alternativ auch spezifiziert werden, dass eine im Folgenden übermittelte Nachricht nicht sofort wiedergeben wird, sondern mit einer definierten zeitlichen Verzögerung oder zu einer bestimmten Uhrzeit oder abhängig von einem bestimmten Ereignis (Tastendruck, Feueralarm, Beendigung einer bestehenden Kommunikationsverbindung etc.).

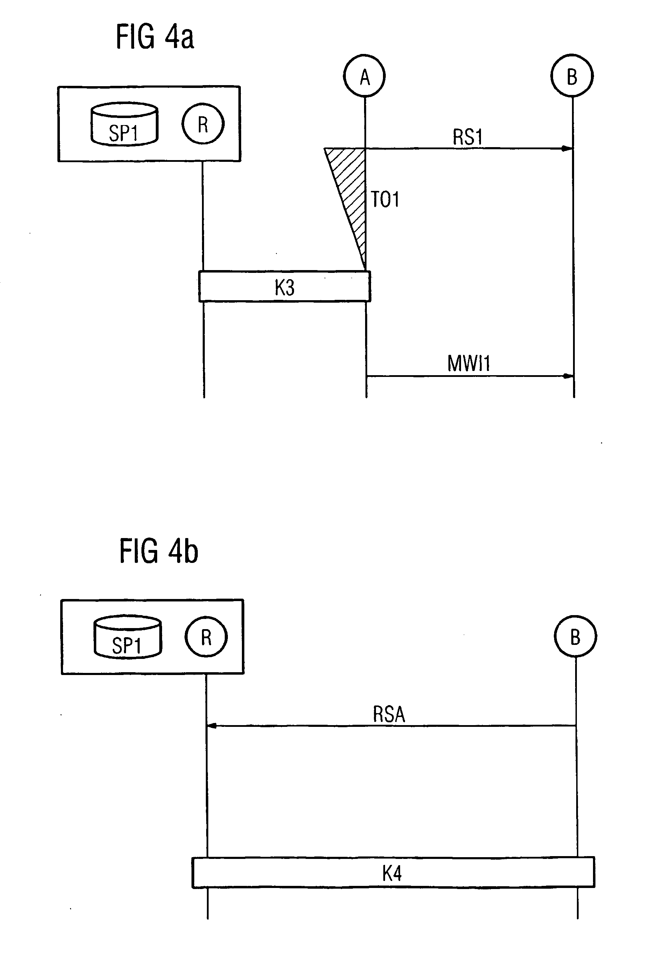

Die Figuren 4a und 4b zeigen die Signalisierung einer aufgezeichneten Nachricht für einen betroffenen Client, und der Abruf dieser gespeicherten Nachricht durch den betroffenen Client ist beschrieben. Die Visualisierung (Signalisierung) einer wartenden Nachricht an der Benutzeroberfläche eines Clients wird auch als "Message Waiting Indication" bezeichnet.

Zunächst wird anhand der Figur 4a die Aufzeichnung und die Signalisierung einer Nachricht veranschaulicht. Ein Client A versendet zum Aufbau einer Kommunikationsverbindung eine Ruf-Signalisierungsnachricht RS1 zu Client B, an dem nun der Ruf signalisiert wird. Der Ruf wird jedoch an Client B nicht entgegen genommen, so dass nach Ablauf einer vorher definierten Wartezeit TO1 (hier: 20 Sekunden) eine (hier nicht dargestellte) Steuerungsnachricht zur Beendigung der Ruf-Signalisierung (Ruf-Stornierungsnachricht) von Client A zu Client B versendet wird, wodurch die Ruf-Signalisierung an Client B beendet wird. Dem Benutzer des Clients A wird nun an der Benutzeroberfläche die Möglichkeit offeriert, Verbindung zu einem Nachrichtenspeicher ("Anrufbeantworter") aufzunehmen, um eine Nachricht für den nicht erreichbaren Client B zu hinterlassen. Nach Bestätigung durch den Benutzer baut Client A eine Kommunikationsverbindung zu Client R, der mit einer entsprechenden Speichereinheit SP1 ausgerüstet ist, auf.

Im vorliegenden Fall sind die Client-Adressinformationen des Clients R in dem Client A fest einprogrammiert; selbstverständlich kann der Client A auch Suchfunktionen aufweisen, mit deren Hilfe in einem direkt kommunizierenden Kommunikationsnetzwerk ein Client oder mehrere Clients aufgefunden werden können, die über entsprechende Speichereinrichtungen verfügen. Dabei kann wie in den vorangegangenen Beispielen auch zwischen verschiedenen Diensten unterschieden werden, so dass für Sprachverbindungen nur Sprachspeicher ("Voice-Mail-Server") und für Textnachrichten beispielsweise E-Mail-Server o. ä. gesucht und verwendet werden. Mit Hilfe der zu dem Client R aufgebauten Kommunikationsverbindung K3 speichert Client A die zu hinterlegende Nachricht in den Datenspeicher SP1 des Clients R und baut danach die Verbindung zu dem Client R ab. Danach versendet Client A zu dem als ersten Client verwendeten Client B eine Nachrichten-Indikationsnachricht MWI1 ("Message Waiting Indication"), die die Client-Adressinformation des als Zielclient verwendeten Clients R und eine Identifikationsnummer für die abzurufende Nachricht umfasst.

Im Folgenden ist anhand der Figur 4b der Abruf der zuvor gespeicherten Nachricht durch Client B, der hierbei als rufender Client verwendet wird, veranschaulicht. Der Benutzer des Clients B sieht in der optischen Anzeige der Benutzeroberfläche des Clients B die Information darüber, dass eine gespeicherte Nachricht des Clients A abrufbar ist. Nach Eingabe eines Abrufbefehls durch den Benutzer sendet Client B zum Client R eine spezielle Ruf-Signalisierungsnachricht RSA für den Abruf von Nachrichten, die die Identifikationsnummer der gespeicherten und für Client B vorgesehenen Nachricht umfasst. Weiterhin umfasst die Ruf-Signalisierungsnachricht RSA die Client-Adressinformationen des Clients B. Anhand der derart ausgetauschten Client-Adressinformationen wird zwischen dem Client B und dem Client R die Kommunikationsverbindung K4 aufgebaut, über die der Client R die in dem Datenspeicher ST1 gespeicherte Nachricht zum Client B übermittelt.

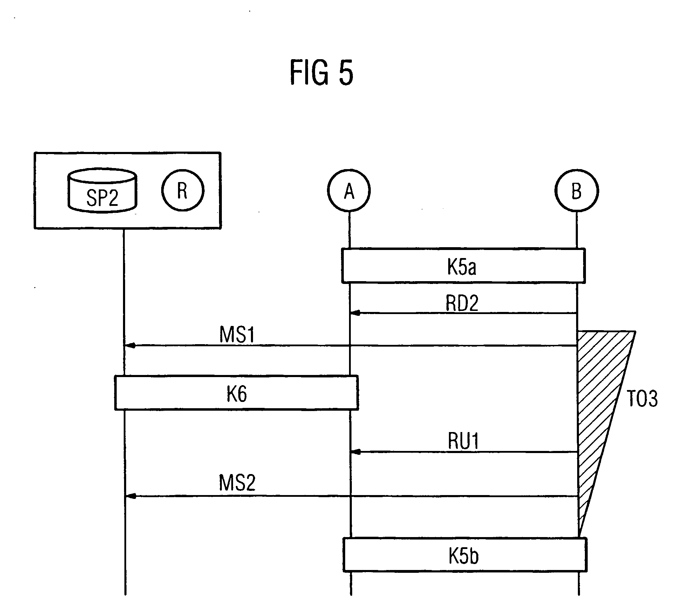

Nachfolgend wird anhand der Figur 5 der Aufbau und der Abbau einer Kommunikationsverbindung von einem wartenden Client zu einer Informationsquelle für Warteinformationen gezeigt. Dabei kann der wartende Client nicht nur mit Wartemusik oder audio-basierten Warteinformationen versorgt werden, sondern es können in Abhängigkeit von der Ausgestaltung des Clients und der Warteinformationsquelle beispielsweise auch Videobotschaften oder textbasierte Informationen dem wartenden Benutzer zur Verfügung gestellt werden. Daher wird dieses Leistungsmerkmal auch allgemein als "Media on Hold" bezeichnet.

Im Ausgangszustand sind der Client A als erster Client und der Client B als zweiter Client in einer Kommunikationsverbindung K5a miteinander verbunden. Diese Kommunikationsverbindung K5a soll vom Client B aus temporär unterbrochen werden. Ein möglicher Grund dafür ist eine Rückfrage des Clients B, ein weiterer möglicher Grund kann die Absicht des Clients B sein, den Client A mit zuvor gespeicherten Informationen zu versorgen. Der letztgenannte Anwendungsfall ist typisch für ein Call-Center, in dem ein Anrufer eine bestimmte Information nachfragt, und diese Information nach Veranlassung eines Call-Center-Agenten dem Anrufer eingespielt wird.

Zum Unterbrechen der Kommunikationsverbindung K5a und zum Start der Informationseinspielung versendet Client B zu Client A eine Anrufübergabe-Signalisierungsnachricht RD2 (RD = Redirect), die neben den "Redirect"-Befehl die Client-Adressinformationen des Clients R, der als Zielclient vorgesehen ist, umfasst. Diese Client-Adressinformationen werden in dem als erstem Client verwendeten Client A gespeichert. Weiterhin versendet Client B eine Nachrichtenauswahl-Signalisierungsnachricht MS1 (MS = Message Select) zum Client R, in der dem Client R die Bezeichnung derjenigen Information übermittelt wird, die dem Client A zur Verfügung gestellt werden soll. Die Signalisierungsnachricht MS1 umfasst dazu selbstverständlich auch die Client-Adressinformation des Clients A. Der Client R ist mit einer Datenbank SB2 ausgestattet, in der eine Anzahl auswählbarer Informationsinhalte in Form von Dateien gespeichert sind.

Der Client A versendet nun als rufender Client (hier nicht dargestellte) Signalisierungsnachrichten zum Aufbau einer Kommunikationsverbindung K6 zu dem Client A. Diese Signalisierungsnachricht enthält die Client-Adressinformationen des Clients A. Im Client R wird festgestellt, dass für diesen Client A bereits eine Nachricht ausgewählt ist, so dass der Client R eine (hier ebenfalls nicht dargestellte) Bestätigungsnachricht "Connect" zu dem Client A versendet, nach deren Empfang die Kommunikationsverbindung K6 aufgebaut wird. Bei der Kommunikationsverbindung K6 handelt es sich um eine monodirektionale Kommunikationsverbindung, d.h., dass nur ein einziger Datenstrom (Datenkanal) geschaltet wird, nämlich von Client R zu Client A.

Alternativ kann die Information über die ausgewählte Nachricht auch von Client B zu Client A übertragen werden. Dann fordert Client A nach dem Aufbau der Kommunikationsverbindung K6 die Nachricht selbst bei Client R an.

In dem vorliegenden Ausführungsbeispiel ist es eine Warteinformation, die mittels der Kommunikationsverbindung K6 von dem Client R zum Client A übermittelt und dort wiedergegeben wird. Diese Warteinformation wird zur Überbrückung der Zeitdauer einer (hier nicht dargestellten) Rückfrage des Clients B verwendet. Nach der Beendigung dieser Rückfrage soll von Client B aus die Einspielung der Wartemusik an Client A beendet und die unterbrochene Kommunikationsverbindung K5a wieder aufgenommen werden. Dazu versendet Client B zu Client A eine Signalisierungsnachricht RU1 (Verbindungsübernahme-Nachricht), die die Client-Adressinformation des Clients B und eine Bezugnahme auf die Rufweiterleitungs-Signalisierungsnachricht RD2 umfasst. Dadurch wird in Client A erkannt, dass Client B die Berechtigung besitzt, die bestehende Kommunikationsverbindung K6 zu beenden und den Aufbau einer "neuen" Kommunikationsverbindung K5b, die als Fortsetzung der unterbrochenen Kommunikationsverbindung K5a verwendet wird, anzufordern. Zusammen mit der Signalisierungsnachricht RU1 versendet Client B zu Client R eine Media-Steuerungsnachricht MS2, um die Wiedergabe der Warteinformation zu stoppen.

Nach Empfang der Signalisierungsnachricht RU1 wird die Kommunikationsverbindung K6 durch Client A beendet und die Kommunikationsverbindung K5b wird zwischen Client A und Client B etabliert. Alternativ kann das Versenden der Media-Steuerungsnachricht MS2 von Client B zu Client R auch entfallen, damit zu einem späteren Zeitpunkt die Kommunikationsverbindung K5b nochmals durch Client B unterbrochen werden kann, um dann die Einspielung der Warteinformation bei dem Client A an der vorher unterbrochenen Stelle fortzusetzen.

Falls die Einspielung der Warteinformation nicht der reinen Überbrückung einer Wartezeit, sondern der gezielten Information des Clients A erfolgt, ist es vorteilhaft, die ausgewählte Warteinformation dem Client A vollständig einzuspielen. In diesem Fall wird die Verbindung nicht von dem Client B mit Hilfe der Signalisierungsnachricht RU1 zu einem willkürlichen Zeitpunkt "zurückgeholt", sondern der Client R signalisiert dann mit einer (nicht dargestellten) Signalisierungsnachricht "Message Complete" dem Client B die vollständige Wiedergabe der angeforderten Informationen, wobei Client B erst nach dem Empfang der "Message Complete"-Signalisierungsnachricht den Abbau der Kommunikationsverbindung K6 initiiert und die Kommunikationsverbindung K5b zum Client A aufbaut.

Es sind auch temporäre Unterbrechungen der Warteinformations-Wiedergabe ("Ansage") und damit der Kommunikationsverbindung K6 möglich, beispielsweise zu einer persönlichen Rückfrage. Diese Rückfrage kann entweder durch Übersendung entsprechender Signalisierungsnachrichten von Client B zu den Clients A und R ausgelöst werden, oder durch Signalisierungsnachrichten, die von Client A zu den Clients B und R versendet werden. Anstelle einer vollständigen Unterbrechung der Kommunikationsverbindung K6 kann im erstgenannten Fall alternativ die Rückfrage auch "weich" in die Warteinformations-Wiedergabe "eingeblendet" werden. Dazu werden mit von Client B übermittelten Signalisierungsnachrichten spezielle Steuerkommandos übermittelt, die im Client A zu einer entsprechenden Mischung der Warteinformation mit der Rückfrage führt.

## Patentansprüche

1. Verfahren zum Aufbau einer Kommunikationsverbindung zwischen zwei Clients einer Mehrzahl Clients (A,B,C) in einem direktkommunizierenden Kommunikationsnetzwerk,
wobei zum Aufbau der Kommunikationsverbindung Client-Adressinformationen umfassende Signalisierungsinformationen zwischen an der Kommunikationsverbindung zu beteiligenden Clients ausgetauscht werden, und
wobei die Kommunikationsverbindung anhand der Client-Adressinformationen direkt zwischen den an der Kommunikationsverbindung zu beteiligenden Clients aufgebaut wird,
**dadurch gekennzeichnet,**
**dass** zur Ausführung einer Anrufweiterschaltung folgende Verfahrensschritte nacheinander durchgeführt werden:
a) in einem ersten Client (B) werden für den Aufbau einer paarweisen Kommunikationsverbindung zwischen den Clients erforderliche Client-Adressinformationen wenigstens eines das Anrufweiterschaltungs-Ziel bildenden Zielclients (C) gespeichert,
b) von dem ersten Client (B) werden die gespeicherten Client-Adressinformationen des Zielclients (C) zu einem rufenden Client (A) übermittelt, wobei der erste Client (B) bei einem eingehenden Ruf des rufenden Clients (A) Signalisierungsinformationen zur Rufsignalisierung eines weiteren Rufes zu dem Zielclient (C) versendet wobei bei der Annahme des weiteren Rufes an dem Zielclient (C) von diesem eine Rufannahme-Signalisierungsnachricht zu dem ersten Client (B) übermittelt wird, wonach von dem ersten Client (B) die Client-Adressinformationen des Zielclients (C) zu dem rufenden Client (A) übermittelt werden, und
wobei die Übermittlung der Signalisierungsinformationen zur Rufsignalisierung des weiteren Rufes zu dem Zielclient (C) dann erfolgt, wenn der Ruf an dem ersten Client (B) hicht innerhalb einer Wartezeit entgegengenommen wird, und
c) der rufende Client (A) verwendet diese Client-Adressinformationen zum Aufbau der Kommunikationsverbindung zwischen dem rufenden Client (A) und dem Zielclient (C).

2. Verfahren nach Patentanspruch 1,
**dadurch gekennzeichnet,**
**dass** zwischen den Schritten a) und b) der rufende Client (A) zum Aufbau einer Kommunikationsverbindung Signalisierungsinformationen zur Rufsignalisierung zu dem ersten Client (B) versendet.

3. Verfahren nach einem der Patentansprüche 1 oder 2,
**dadurch gekennzeichnet,**
**dass** in Schritt a) in dem ersten Client (B) die Client-Adressinformationen mehrerer Zielclients gespeichert werden, die jeweils einem oder mehreren verschiedenen Diensten zugeordnet sind, und
in Schritt b). bei einem bei dem ersten Client (B) eingehenden Ruf in den Signalisierungsinformationen der Dienst definiert ist, der von der aufzubauenden Kommunikationsverbindung unterstützt werden soll, wobei anhand dieser Definition die Client-Adressinformationen desjenigen Zielclients ausgewählt und übermittelt werden, der diesem Dienst zugeordnet ist.

4. Verfahren nach Patentanspruch 3,
**dadurch gekennzeichnet,**
**dass** die Dienste aus einer Gruppe ausgewählt sind, die Sprachdienste, Videodienste und Datendienste umfasst.

5. Verfahren nach einem der Patentansprüche 1 bis 4,
**dadurch gekennzeichnet,**
**dass** in Schritt c) von dem rufenden Client (A) zu dem Zielclient (C) beim Aufbau der Kommunikationsverbindung Ruf-Signalisierungsinformationen mit einem Steuerkommando übertragen werden, so dass der Ruf von dem Zielclient (C) automatisch angenommen wird.

## Claims

1. Method for setting up a communication link between two clients of a plurality of clients (A,B,C) in a directly-communicating communication network,
in which signaling information comprising client address information is interchanged between clients who wish to be involved in the communication link, in order to set up the communication link, and
in which the communication link is set up directly between the clients who wish to be involved in the communication link, on the basis of the client address information,
**characterized**
**in that,** in order to forward a call,
the following method steps are carried out successively:
a) client address information which is required to set up a communication link between the clients in pairs is stored for at least one destination client (C), which forms the call forward destination, in a first client (B),
b) the stored client address information for the destination client (C) is transmitted from the first client (B) to a calling client (A), in which, when a call arrives from the calling client (A), the first client (B) sends signaling information for call signaling of a further call to the destination client (C), in which case on acceptance of the further call at the destination client (C), the latter transmits a call acceptance signaling message to the first client (B), on the basis of which the first client (B) transmits the client address information for the destination client (C) to the calling client (A), and
in which the signaling information for call signaling of the further call is transmitted to the destination client (C) if the call is not answered at the first client (B) within a waiting time, and
c) the calling client (A) uses this client address information to set up the communication link between the calling client (A) and the destination client (C).

2. Method according to Patent Claim 1,
**characterized**
**in that** the calling client (A) sends signaling information for call signaling to the first client (B) between steps a) and b), in order to set up a communication link.

3. Method according to one of Patent Claims 1 and 2,
**characterized**
**in that** the client address information for a plurality of destination clients is stored in the first client (B) in step a), and is in each case associated with one or more different services, and
when a call arrives at the first client (B), the signaling information in step b) defines the service which is intended to be supported by the communication link to be set up, with the client address information for that destination client which is associated with this service being selected and transmitted on the basis of this definition.

4. Method according to Patent Claim 3,
**characterized**
**in that** the services are selected from a group which comprises speech services, video services and data services.

5. Method according to one of Patent Claims 1 to 4,
**characterized in that** the calling client (A) transmits call signaling information with a control command to the destination client (C) when setting up the communication link in step c) so that the call is accepted automatically by the destination client (C).

## Revendications

1. Procédé d'établissement d'une liaison de communication entre deux clients parmi plusieurs clients ( A, B, C ) dans un réseau de communication directe,
- dans lequel, pour l'établissement de la liaison de communication, des informations de signalisation comprenant des informations d'adresse de client sont échangées entre des clients devant participer à la liaison de communication, et
- dans lequel, à l'aide des informations d'adresse de client, la liaison de communication est établie directement entre les clients devant participer à la liaison de communication,
**caractérisé par le fait que**,
pour la réalisation d'un transfert d'appel, les étapes suivantes du procédé sont exécutées successivement :
a) dans un premier client ( B ), on mémorise des informations d'adresse de client, nécessaires à l'établissement d'une liaison de communication par paire entre les clients, au moins d'un client de destination ( C ) constituant la destination du transfert d'appel,
b) à partir du premier client ( B ), on transmet les informations d'adresse de client mémorisées du client de destination ( C ) à un client appelant ( A ), le premier client ( B ) en présence d'un appel entrant du client appelant ( A ) envoyant des informations de signalisation pour la signalisation d'appel d'un autre appel au client de destination ( C ), lors de l'acceptation de l'autre appel dans le client de destination ( C ), celui-ci transmettant un message de signalisation d'acceptation d'appel au premier client ( B ) puis le premier client ( B ) transmettant les informations d'adresse de client du client de destination ( C ) au client appelant ( A ), et la transmission des informations de signalisation pour la signalisation d'appel de l'autre appel au client de destination ( C ) s'effectuant alors lorsque l'appel dans le premier client ( B ) n'a pas été accepté dans les limites d'un certain temps d'attente, et
c) le client appelant ( A ) utilise ces informations d'adresse de client pour l'établissement de la liaison de communication entre le client appelant ( A ) et le client de destination ( C ).

2. Procédé selon la revendication 1,
**caractérisé par le fait que**, entre les étapes a ) et b ), le client appelant ( A ) envoie pour l'établissement d'une liaison de communication des informations de signalisation pour la signalisation d'appel au premier client ( B ).

3. Procédé selon l'une des revendications 1 ou 2,
**caractérisé par le fait que**,
à l'étape a ), dans le premier client ( B ), on mémorise les informations d'adresse de client de plusieurs clients de destination qui sont associés chacun à un ou plusieurs services différents, et
à l'étape b ), en présence d'un appel entrant dans le premier client ( B ), les informations de signalisation définissent le service qui doit être supporté par la liaison de communication à établir, les informations d'adresse de client du client de destination qui est associé à ce service étant sélectionnées à l'aide de cette définition puis transmises.

4. Procédé selon la revendication 3,
**caractérisé par le fait que** les services sont sélectionnés dans un groupe qui comprend des services audio, des services vidéo et des services de données.

5. Procédé selon l'une des revendications 1 à 4,
**caractérisé par le fait que**, à l'étape ( C ), des informations de signalisation d'appel avec une instruction de commande sont transmises du client appelant ( A ) au client de destination ( C ) lors de l'établissement de la liaison de communication de telle sorte que l'appel est automatiquement accepté par le client de destination ( C ).
